# EUROPEAN PATENT APPLICATION

(11) **EP 4 708 184 A1**
(43) Date of publication of application: **11.03.2026**
(21) Application number: 25187355.0
(22) Date of filing: 03.07.2025
(51) Int. Cl.: G06Q 30/0601, G06F 16/9535, G06F 16/9536, G06N 20/00

(54) **PRODUCT SEARCH METHOD AND ELECTRONIC DEVICE**

(30) Priority: 04.09.2024 CN 202411240767
(71) Applicant: Hangzhou Alibaba International Internet Industry Co., Ltd., Hangzhou City, Zhejiang Province (CN)
(72) Inventor: JIANG, Jianming, Hangzhou City (CN); ZHANG, Guannan, Hangzhou City (CN); CHENG, Yaping, Hangzhou City (CN)
(74) Representative: Wu, Ting

(57) **Abstract**

A product search method including: providing an interactive area in a product search result page after receiving a product search request input by a first user, wherein the interactive area is configured to provide a plurality of decision parameters, some or all of the decision parameters being associated with parameter value alternatives; and the decision parameters displayed in the interactive area comprise: a portion of professional decision parameters related to bulk procurement or customization of products in a category or industry to which a currently searched product belongs; the professional decision parameters are generated by an artificial intelligence AI large model after performing an inference analysis on product information and/or user behavior data in the category or industry; and updating product search results after receiving a parameter value setting result completed by the first user for the plurality of decision parameters.

## Description

### CROSS-REFERENCE TO RELATED APPLICATIONS

This application claims priority to and is a continuation of Chinese Patent Application No. 202411240767.1, filed on September 4, 2024.

### TECHNICAL FIELD

The present disclosure relates to the technical field of product search, and, more particularly, to product search methods and electronic devices.

### BACKGROUND

In a product information service system (also known as an e-commerce platform), product search is an important way for users to obtain product information. Users may initiate product searches by entering keywords, and the system may return a list of products that match the keywords. Users may then select therefrom the products that are of interest to them, and so on. However, in actual applications, after a user enters a keyword to initiate a search, there is often a need to narrow down the search scope. For example, a user might enter "dress" to initiate a search, but since there are many products under the "dress" category, the user may need to narrow down the search scope by, for example, changing the keyword to "French palace style dress," and the like. In addition, some systems may also provide users with "filtering" or "screening" functions, for example, filtering by category. However, the above filters may involve operations such as level-by-level selection for a category during the use process, which poses operational difficulties and ease-of-use issues, and the usage rate is not high.

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter. The term "technique(s) or technical solution(s)" for instance, may refer to apparatus(s), system(s), method(s) and/or computer-readable instructions as permitted by the context above and throughout the present disclosure.

The present disclosure provides product search methods and electronic devices that more effectively help users obtain more accurate search results.

The present disclosure provides the following solutions.

A product search method comprising:
providing an interactive area in a product search result page after receiving a product search request input by a first user, wherein the interactive area is configured to provide a plurality of decision parameters, some or all of the decision parameters being associated with parameter value alternatives; and the decision parameters displayed in the interactive area comprise: a portion of professional decision parameters related to bulk procurement or customization of products in a category or industry to which a currently searched product belongs; the professional decision parameters are generated by an artificial intelligence (AI) large model after performing an inference analysis on product information and/or user behavior data in the category or industry;
updating product search results after receiving a parameter value setting result completed by the first user for the plurality of decision parameters.

The method further comprises:
updating, in the process of updating the product search results, information on the decision parameters displayed in the interactive area, wherein the updated decision parameters are selected and determined from an entire set of decision parameters except for those having parameter values thereof set, so as to further narrow a search scope of the products.

For example, the updated product search results are generated with the assistance of the AI large model.

The updated product search results are acquired by:
determining search requirements of the first user according to the parameter value setting of the plurality of decision parameters, and generating the product search results according to a set of matching products corresponding to the search requirements;
the set of matching products is generated by: enumerating various possible product search requirements according to the plurality of decision parameters and parameter value alternatives corresponding to the category or industry, and then generating and saving the set of matching products corresponding to the plurality of product search requirements after the AI large model performs matching calculations based on multimodal product information of a plurality of products in a product library.

For example, the decision parameters further comprise: decision parameters related to a service capability, level, or attitude of a second user, wherein the second user is a wholesale or production supplier user of products.

Parameter values set by the first user respectively for the plurality of decision parameters during multiple rounds of interactions are saved, so that when the first user initiates a product search request for the same category or industry again, product search results may be acquired by applying the set parameter values.

For example, the product search request input by the first user comprises: a product search request initiated by inputting a sentence expressed in natural language.

A product information processing method comprising:
performing an inference analysis on product information and/or user behavior data of a plurality of categories or industries using an AI large model, and determining a plurality of professional decision parameters and parameter value alternatives related to bulk procurement or customization of products in the same category or industry;
determining, by combining a plurality of parameter value alternatives of a plurality of decision parameters corresponding to the same category or industry, a plurality of possible user search requirements;
performing an inference analysis on multimodal product information in a product library using the AI large model, determining a set of products matching the plurality of possible user search requirements in the same category or industry, and saving a matching result; and
determining search requirements of a first user after the first user's product search requirements and parameter value setting information for a plurality of decision parameters under a certain category or industry is received, and generating product search results according to a set of matching products corresponding to the search requirements.

A computer-readable storage medium having stored thereon a computer program which, when executed by a processor, implements the steps described in any of the above-described methods.

An electronic device comprising:
one or more processors; and
a memory associated with the one or more processors, the memory being configured to store program instructions which, when read and executed by the one or more processors, execute the steps described in any of the above-described methods.

A computer program product, comprising computer programs/computer-executable instructions, wherein when the computer programs/computer-executable instructions are executed by a processor in an electronic device, the steps of any of the aforementioned method are implemented.

According to example embodiments provided by the present disclosure, the present disclosure discloses the following technical effects:
Through the embodiments of the present disclosure, in the process of searching for products by the first user who is mainly a Class B or business or bulk buyer, an interactive area may be provided in the product search result page, the interactive area being configured to display a plurality of decision parameters, wherein some or all of the decision parameters may further be associated with parameter value alternatives, and wherein the displayed decision parameters may be a portion of the professional decision parameters related to bulk procurement or customization of products in a category or industry to which the currently searched product belongs, and these professional decision parameters may be generated by the AI large model after performing an inference analysis on product information and/or user behavior data in the category or industry. After the first user completes setting parameter values for the plurality of decision parameters, the product search results may be updated. In this way, AI technology may be applied to product search scenarios for Class B users and provide users with professional decision parameters related to bulk procurement or customization of products in specific product categories or industries, thus effectively helping users narrow down the search scope through setting parameter values of professional decision parameters, thereby obtaining more accurate search results.

In an example manner, in the process of displaying the updated product search results, information on the decision parameters displayed in the interactive area may further be updated, wherein the updated decision parameters are selected and determined from the remaining decision parameters after the decision parameters having parameter values thereof set are removed from the entire set of decision parameters, so as to further narrow down a search scope of the products. In this way, through multiple rounds of interactions, it is possible to avoid the number of parameter setting operations performed by the user in the same interaction.

In addition, in an example manner, the specific decision parameters provided may include not only parameters related to product attributes, but also decision parameters related to the capabilities, levels, services, etc. of the first user, i.e., the supplier, enabling the first user to screen according to the first user's situation.

Implementation of any solutions of the present disclosure does not necessarily need to achieve all of the advantages described above.

### BRIEF DESCRIPTION OF DRAWINGS

To describe the technical solutions in the embodiments of the present disclosure more clearly, the following briefly describes the accompanying drawings required for describing the embodiments. Apparently, the accompanying drawings in the following description are merely some embodiments of the present disclosure, and those of ordinary skill in the art may further derive other accompanying drawings from these accompanying drawings without inventive efforts.
FIG. 1 is a schematic diagram of a system architecture according to an embodiment of the present disclosure;
FIG. 2 is a flowchart of a client-side method according to an embodiment of the present disclosure;
FIG. 3 is a schematic diagram of a first interface according to an embodiment of the present disclosure;
FIG. 4 is a schematic diagram of a second interface according to an embodiment of the present disclosure;
FIG. 5 is a schematic diagram of a third interface according to an embodiment of the present disclosure;
FIG. 6 is a flowchart of a service-side method according to an embodiment of the present disclosure; and
FIG. 7 is a schematic diagram of an electronic device according to an embodiment of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are merely some, but not all, of the embodiments of the present disclosure. Based on the embodiments in the present disclosure, all other embodiments obtained by those of ordinary skill in the art shall fall within the protection scope of the present disclosure.

First of all, it should be noted that with the emergence of AI models, especially AI large-scale parameter models (referred to as AI large models), the application of such has been seen in multiple scenarios, and new ideas for product search are likewise provided thereby. In fact, related attempts have also been made in some systems. In their specific solutions, users may express their search requirements by inputting natural language, for example, "I want to buy a smart watch." Afterwards, an AI assistant may help users narrow down their search scope. For example, the AI assistant may display some options for users to choose from, including: if the purchase is for men, women, or children, what is the approximate price range required, whether fitness tracking functions are needed, whether there are high requirements for intelligence, and so on. Users may make their respective choices for these options, and then corresponding product search results will be provided.

Compared with the method of providing filters through a sidebar, etc., the above solution is more conducive to obtaining more accurate search results. However, the inventors of the present disclosure found in the process of implementing the present disclosure that the above solution still has at least the following problems. First, the above solution is mainly designed for the shopping scenarios of Class C buyers. The so-called Class C buyers are individual consumers or end buyers. When purchasing products, such Class C buyers mainly use the products for individual consumption purposes. Therefore, not too many decision factors are required, as the factors generally focus on the user of the product, price, and performance (conclusive expressions are sufficient, for example, high, medium, low, etc.), and often professional decision factors are not seen. Therefore, when guiding users to narrow down the search scope, the AI assistant generally only needs to list a few simple decision factors for users to choose from, and then provides search results. The specific decision factors may be directly configured manually in advance.

However, in e-commerce scenarios related to cross-border trade, buyers are usually categorized as Class B buyers. Different from Class C buyers, Class B buyers usually refer to bulk buyers or corporate buyers, who purchase products in large quantities and may even need customized production of products from factory-type merchants. In addition, the purchased products are mainly for commercial purposes, such as wholesale, resale, etc. Therefore, the shopping mode and interaction method of Class B buyers on e-commerce platforms will also be different from those of Class C buyers. The difference may be specifically reflected in the fact that when Class B buyers are in the process of purchasing products, the decision factors they need to consider are usually highly professional and may be large in number. Moreover, for different product categories or industries, specific decision factors may also vary greatly. At this time point, if the specific decision factors are still configured manually, the workload would be too large, and the professional requirements for the configuration personnel will also be very high, requiring the configuration personnel to have a deep understanding of the professional knowledge in various industries, which will obviously result in huge labor costs and time costs. In addition, since there may be a large number of specific decision factors, when all decision factors are listed for users to choose from, as is the case in the conventional techniques, it may instead cause user resentment.

Therefore, considering the above, in an embodiment of the present disclosure, in the process of using AI technology to help users search for products, the AI assistant may conduct multiple rounds of interaction with the users. Specifically, after a user enters a search request and search results are given, an interactive area may be provided in the search result page, in which a plurality of decision parameters may be displayed. These decision parameters may be a portion of, but not necessarily all, the professional decision parameters related to bulk procurement or customization of products in a category or industry to which the currently searched product belongs. That is to say, in the process of multiple rounds of interaction, each round may only require the user to set the parameter values for some decision parameters. After the user has set the parameter values for some parameters, the search results may be updated, and then the next round of interaction with the user may be conducted. At this time point, in an example manner, other decision parameters for which parameter values have not yet been set may be displayed in the interaction area. As such, through multiple rounds of interaction, users may gradually narrow down their search scope and eventually obtain more accurate search results.

Decision parameters specifically displayed in each round may certainly be selected and determined from the total set of decision parameters associated with the category or industry to which the currently searched product belongs. Since the specific decision parameters are relatively professional, they can be generated through the AI large model. That is to say, during a specific implementation, the product information and user behavior information related to a specific category or industry (the user behavior information may also be user behavior data related to requirements such as bulk procurement or processing customization, including purchase order information and inquiry information issued by a buyer user, conversation record information during an online dialogue and communication between a buyer and a seller regarding a certain purchasing requirement, etc.) may be input into the AI large model in advance, and the AI large model will perform an inference analysis and provide the professional decision parameters that users usually pay attention to when making bulk procurement or ordering customized products in this category or industry. In addition, the AI large model may also generate parameter value alternatives under specific decision parameters. For example, the specific parameter values of the decision parameter "pattern type" may include: flowers, stripes, solid colors, etc. The above process may be completed in advance with an AI large model performing an offline inference analysis, so as to obtain a total set of decision parameters corresponding to various different categories or industries; and corresponding parameter value alternatives may further be provided for some or all of the decision parameters.

In this way, after a product search request from a buyer user (who may be referred to as the first user in the embodiments of the present disclosure; correspondingly, a merchant user may be referred to as the second user) is received and when it is needed to display decision parameters in the interactive area of the product search result page, some decision parameters may be selected, from the above-mentioned set of decision parameters pre-generated for the category or industry, for display according to the category or industry to which the currently searched product belongs. The selection of the decision parameters may be made by taking into account the personalized preference data of the current first user, or the group preference data of the group to which the current first user belongs. For example, assuming that the historical transaction data of a first user show that he/she pays close attention to the price attribute, then the price-related decision parameters may be preferentially displayed to the first user in the first round of interaction.

After the first user completes setting parameter values for some or all of the decision parameters through the above-mentioned interactive area, search results may be regenerated based on the parameter value setting results and displayed to the first user. In a specific implementation, the regenerated search results may be generated in various manners. For example, in one implementation, the parameter values of a plurality of decision parameters configured by a user may be used as additional keywords, and then search results may be provided through keyword search. However, in actual implementation, since the specific decision parameters and parameter value alternatives are generated by AI, the information about these parameter values may not necessarily appear directly in the text description information like product titles. Therefore, it may be difficult to obtain accurate search results by searching using parameter values directly as keywords. To this end, in an example manner, after a user completes setting the parameter values for a plurality of decision parameters, the AI large model may perform natural language understanding on the user's search request and the setting of the parameter values, and provide corresponding product search results based on the understanding of the user's specific requirements. In other words, the method used to match products is no longer based on keyword matching. Instead, the AI large model completes matching products with users' requirements through natural language understanding, so as to provide more accurate and comprehensive search results.

In addition, since only some of the decision parameters are displayed in the first round of interaction, the displayed specific decision parameters may further be updated in the interactive area of the search result page while the search results are updated. For example, in the process of updating the decision parameters, only the decision parameters for which the parameter values are not yet set will be displayed, while the decision parameters for which the parameter values have been set earlier may not appear again. That is, the selection and determination is made from the remaining decision parameters after the decision parameters having parameter values set are removed from the entire set of decision parameters corresponding to the current category or industry, so as to further narrow down the search scope of the products. In other words, after each round of interaction, at the same time when the updated search results are being obtained, a new batch of decision parameters may be provided for the user to set the parameter values, so as to further narrow down the search scope. For example, assuming that the user has selected a parameter value for the parameter "pattern type" during the first round of interaction, then the parameter "pattern type" will not appear in the interactive area during the next round of interaction.

It should be noted that in the embodiments of the present disclosure, since the main target is the products of wholesale procurement or customized production by Class B buyers, in addition to considering the intrinsic factors of the products, they usually further consider the factors about the second users, i.e., the service capabilities, level, attitude, etc. of specific merchants or suppliers during the procurement process. Therefore, in an example implementation of the present disclosure, the specific decision parameters may further include: decision parameters related to the service capability, level, or attitude of the second users. Thus, parameter values may be set from the perspective of the second user, and the product search scope may be further narrowed.

In the process of progressively providing a plurality of decision parameters through multiple rounds of interaction, options such as "more parameters" may certainly also be provided to users. Thus, in a situation where the user needs to select the parameter values of more parameters in one round of interaction, more decision parameters and parameter value alternatives related to the current product category or industry may be displayed through this option for users to select therefrom.

In addition, during the process of setting parameter values in the multiple rounds of interaction, the specific parameter value setting results from a user in each round of interaction may further be saved. In this way, when the user initiates a product search request for the same category or industry again, the previously saved results may be directly applied for the search purpose without the process of multiple rounds of interaction having to be repeated, thereby improving efficiency.

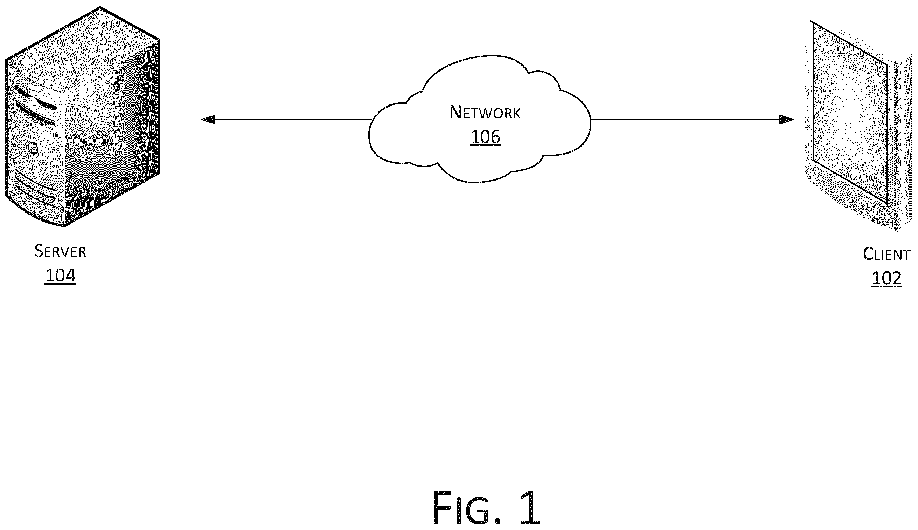

From the perspective of a system architecture, the embodiments of the present disclosure may provide an AI interaction-based product search function in a product information service system, wherein the specific product information service system may be a system that provides cross-border e-commerce services for Class B buyers. Specifically, referring to FIG. 1, the system may include a client 102 and a server 104. The client 102 may be one used for Class B buyers and may mainly be run on terminal devices such as mobile phones and personal computers of buyer users, and the server 104 may be run on a server. For example, the client 102 is mainly configured to interact with users, including providing users with a search portal so that product search requests may be initiated by users and search results may be displayed. In an embodiment of the present disclosure, in the process of displaying search results, an interactive area may further be provided for interacting with an AI assistant, for refreshing and displaying the search results after the interaction, and the like. The server 104 is mainly configured to provide specific data, including the generation of search results, the calling of an AI large model, the storage of relevant data (for example, decision parameters and parameter option information corresponding to multiple categories or industries, and the like). The client 102 and the server 104 communicate via a network 106.

The specific solutions provided by the embodiments of the present disclosure are described in detail below.

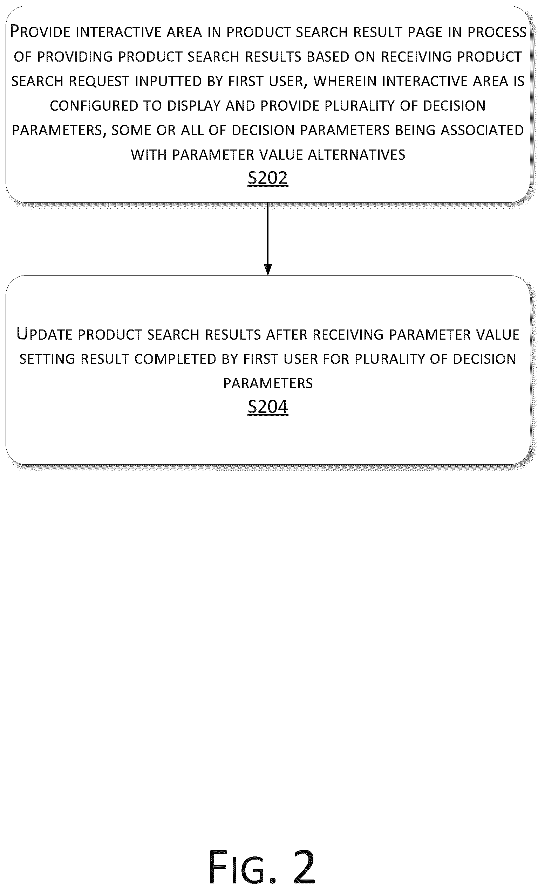

The present disclosure provides a product searching method from the perspective of a client. Referring to FIG. 2, the method may comprise:
S202: providing an interactive area in a product search result page after receiving a product search request input by a first user, wherein the interactive area is configured to provide a plurality of decision parameters, some or all of the decision parameters being associated with parameter value alternatives; and the decision parameters displayed in the interactive area comprise: a portion of professional decision parameters related to bulk procurement or customization of products in a category or industry to which a currently searched product belongs; the professional decision parameters are generated by an artificial intelligence AI large model after performing an inference analysis on product information and/or user behavior data in the category or industry.

In the embodiment of the present disclosure, after a first user generates a product search requirement, the first user may first initiate a search request by inputting keywords or the like; or, in an example manner, since the products may be searched through interaction with AI, the user may also initiate a specific product search request by inputting a long sentence expressed in natural language. That is to say, the information input when a specific search request is initiated may be a long sentence, rather than words or phrases used in conventional keyword search methods. For example, assuming that a user needs to search for products related to smart watches, the input keyword may be "smart watches" per a conventional search method. In the search method that supports AI interaction, the user may enter long sentences to fully express the user's requirements. For example, it may be "I want to buy a smart watch for my daughter. It doesn't need too many functions, just a convenient way to get in touch with my child," and the like. Correspondingly, after the user's search request is received, an AI large model may also be used to understand the long sentences in natural language entered by the user, and then corresponding product search results are provided.

In the embodiment of the present disclosure, at the same time when the search results are displayed, an interactive area may be further provided in the search result page, in which a plurality of decision parameters may be displayed. The specific decision parameters may be a portion of, but not all, the professional decision parameters related to bulk procurement or customization of products in a category or industry to which the currently searched product belongs. Specifically, these professional decision parameters may be generated by the AI large model after performing an inference analysis on product information and/or user behavior data in the category or industry.

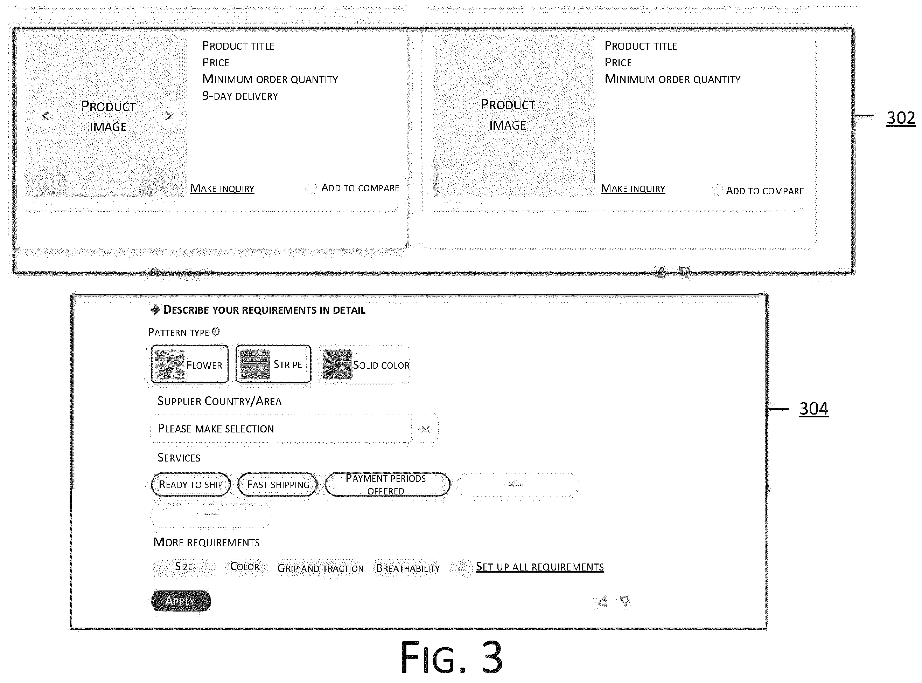

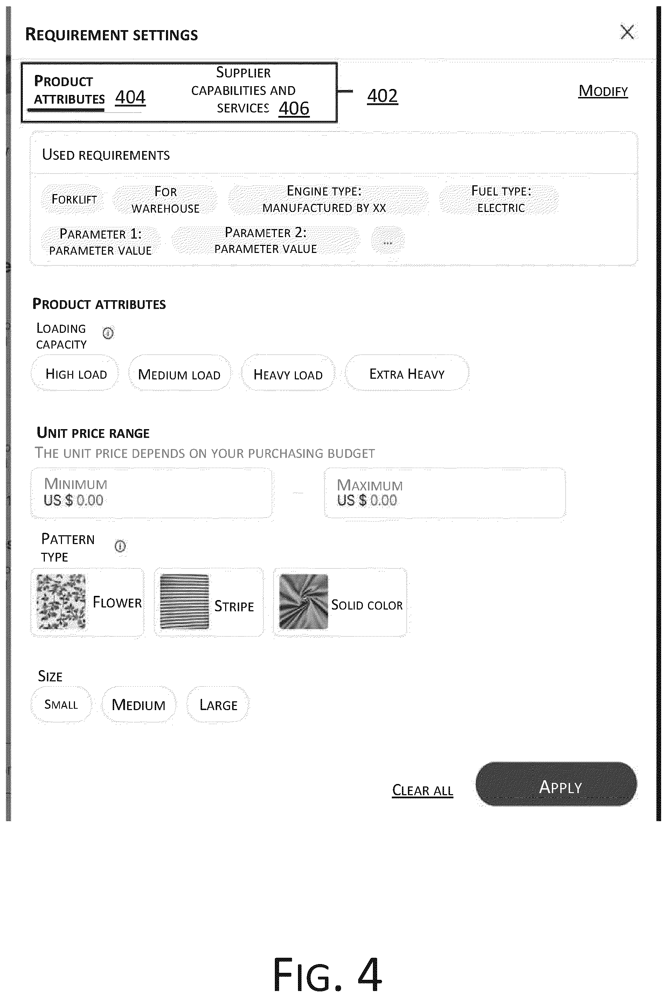

For example, as shown in FIG. 3, in the embodiment of the present disclosure, a portion of the search result page displayed after a first user inputs a search request is shown, wherein information of some products in the specific search results is displayed at 302, and the interactive area in the search result page is shown at 304. As can be seen from the figure, the interactive area displays multiple decision parameters, including pattern type, supplier country/region, service, etc. The first user may narrow down the search scope by setting parameter values for these decision parameters. As only some decision parameters are usually displayed in the interaction area over one round of interaction, if the user needs to set the parameter values for more parameters in one interaction, more decision parameters may certainly be displayed and corresponding settings may be made by means of a click on options like "Set all requirements" as shown in FIG. 3. For example, in the example shown in FIG. 3, if this option is clicked, the displayed interface may be as shown in FIG. 4, which may display the parameters and parameter values that the user has used (the parameters that have been set with parameter values in the previous round or in a historical interaction round, and the corresponding parameter values), and may also display more decision parameters to be set.

It should be noted that when specific decision parameters are displayed, parameter value alternatives may be provided for some decision parameters. For example, for the parameter "pattern type," the parameter value alternatives may include flowers, stripes, solid colors, etc., whereas some decision parameters do not need to be provided with parameter value alternatives. For example, for parameters such as price range, the first user may set the range by entering specific values, and so on. When specific parameter value alternatives are provided, each parameter value option may be displayed in a "capsule-style" manner, so that the user can intuitively know that these options can be clicked and selected, thereby lowering the user's understanding cost of the operation method.

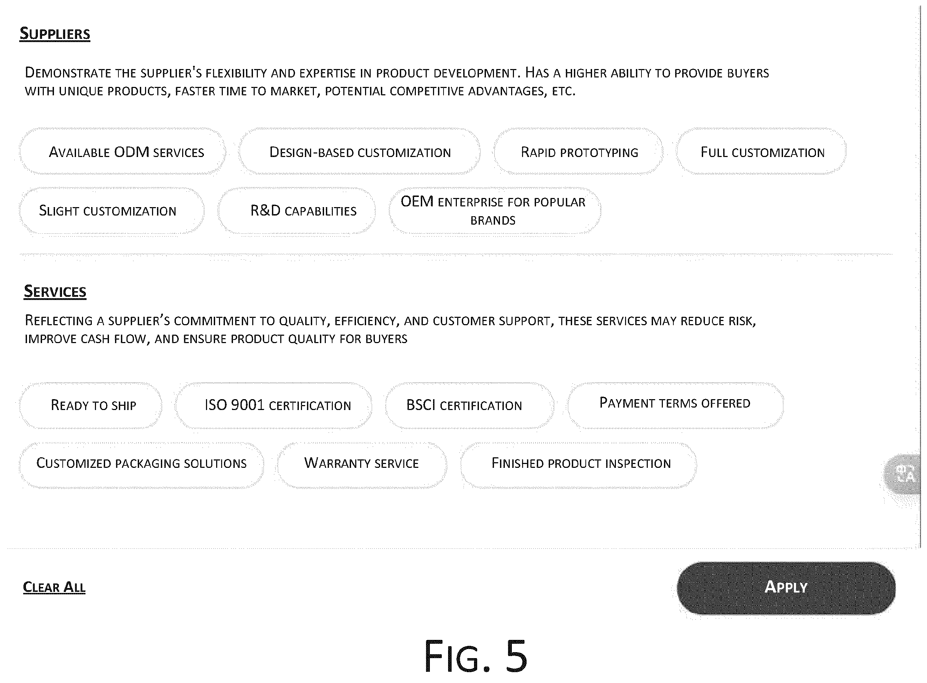

It should also be noted that, in the embodiment of the present disclosure, specific decision parameters may include not only parameters related to product attributes, but also decision parameters related to a second user (i.e., a supplier user of wholesale or production, also referred to as a supplier). That is to say, during the procurement process of Class B buyers, in addition to considering whether the products meet their requirements, they will also examine the service capabilities, level, or attitude of the second user. Therefore, in the embodiment of the present disclosure, such decision parameters related to the second user may also be provided to the first user during the search process. For example, as shown at 402 in FIG. 4, two label items, "product attributes" 404 and "supplier services and capabilities" 406 may be included. The first user may choose to set decision parameters related to product attributes or to set decision parameters related to supplier services and capabilities by switching between the label items. For example, if "product attributes" 404 is selected, the displayed interface may be as shown in FIG. 4. If "supplier services and capabilities" 406 is selected, the specific interface may be displayed as shown in FIG. 5, which may include parameter value alternatives such as "design-based customization," "full customization," and "slight customization."

S204: updating product search results after receiving a parameter value setting result completed by the first user for the plurality of decision parameters.

After the first user completes setting parameter values for the plurality of decision parameters, the product search results may be updated. As mentioned above, in an example manner, specifically in the process of updating the search results, the AI large model may make inferences about the search requirements of the first user based on the product search request input by the first user and the setting of the parameter values of the multiple decision parameters, and then generate product search results. That is to say, specifically in the process of updating the search results, since parameter values may be set for multiple decision parameters, and these parameter values may not necessarily appear directly in the text description content like the product titles and detailed information, the multimodal information processing and understanding capabilities of the AI large model may be leveraged, the specific requirements of the first user may be inferred therefrom, and matching products may be found through search. When the requirements of the first user are matched with the product information, the AI large model may be used to understand various different contents associated with the product, such as text, images, user reviews, etc., and based on which matching calculation may be performed on information of the first user's requirements.

It should be noted herein that since the process of the AI large model matching the first user's search requirements with the products may take a long time, in order to avoid the first user's long wait, the various possible search requirements of the first user may be enumerated in advance; and through an offline calculation, the AI large model may make inferences to arrive at sets of matching products corresponding to the various search requirements (in which the identification information such as the product ID may be saved), and the information is saved on the server. In this way, when the first user initiates a specific search request and sets the parameter values of the decision parameters, and the AI large model determines the search requirements, a set of matching products corresponding to the search requirements may be determined by querying the data pre-saved on the server, and then the search results (including collecting some of the first user's personalized information for rescreening or sorting) may be determined from the set of matching products. After the user sets parameter values for some decision parameters and updates the search requirements, accordingly, the user may also query the server again for a set of matching products corresponding to the new search requirements and determine new search results therefrom.

Specifically, when various search requirements possibly generated by the first user are enumerated offline, since the entire set of professional decision parameters corresponding to specific product categories or industries can be determined, and parameter value alternatives may be provided for most decision parameters, various search requirements may be enumerated by permuting and combining various parameter values of these decision parameters. In the process of permutation and combination, some apparently unreasonable combinations may certainly be removed through manual verification, and then the AI large model may determine corresponding matching product sets for various combinations.

In addition, since only some decision parameters are displayed by default during the first round of interaction, information of other decision parameters for which parameter values have not yet been set may be re-displayed in the interactive area of the search result page at the same time when the search results are updated, so that the first user may further narrow down the search scope by setting parameter values for these decision parameters and obtain search results that better meet his/her requirements.

It should be noted herein that in a specific implementation, the interaction between the first user and the AI assistant may be carried out in multiple rounds, and parameter values may be set for more decision parameters in each round until the first user finds a satisfactory location for the products.

In addition, since the first user in the embodiment of the present disclosure is usually a Class B buyer, when products are specifically searched, it is usually done for a certain procurement requirement, and a procurement requirement usually means wholesale of products, even entrusting factories for processing and customization, etc. Therefore, methods like repeatedly comparing products may be necessary before specific products or suppliers may be selected. It is precisely because of this that the same first user may search for products under the same category or industry at different times, and the specific search requirement may be the same. Therefore, in a specific implementation, in order to improve the search efficiency in the above situation, the parameter values set by the first user respectively for the plurality of decision parameters during multiple rounds of interactions may be saved; as such, when the first user initiates a product search request for the same category or industry again, product search results may be acquired by directly applying the set parameter values. For example, when a first user needs to search for products in a certain category or industry and sets parameter values of 12 decision parameters through multiple rounds of interaction, the parameter value setting results of the 12 decision parameters may be saved on the server. Afterwards, when the first user initiates a product search request for that category or industry again, an option may be provided in the interface to allow the first user to directly apply the parameter values previously set for the 12 decision parameters. In this way, the first user does not need to conduct multiple rounds of interactions with the AI assistant, nor does the first user need to re-set the parameter values for these decision parameters, but may directly acquire corresponding search results.

In summary, through the embodiments of the present disclosure, in the process of searching for products by the first user who is mainly a Class B buyer, an interactive area may be provided in the product search result page, the interactive area being configured to display a plurality of decision parameters, wherein some or all of the decision parameters may further be associated with parameter value alternatives, and wherein the displayed decision parameters may be a portion of the professional decision parameters related to bulk procurement or customization of products in a category or industry to which the currently searched product belongs, and these professional decision parameters may be generated by the AI large model after performing an inference analysis on product information and/or user behavior data in the category or industry. After the first user completes setting parameter values for the plurality of decision parameters, the product search results may be updated. In this way, AI technology may be applied to product search scenarios for Class B users and provide users with professional decision parameters related to bulk procurement or customization of products in specific product categories or industries, thus effectively helping users narrow down the search scope through setting parameter values of professional decision parameters, thereby obtaining more accurate search results.

In an example manner, in the process of displaying the updated product search results, information on the decision parameters displayed in the interactive area may further be updated, wherein the updated decision parameters are selected and determined from the remaining decision parameters after the decision parameters having parameter values thereof set are removed from the entire set of decision parameters, so as to further narrow down a search scope of the products. In this way, through multiple rounds of interactions, it is possible to avoid the number of parameter setting operations performed by the user in the same interaction.

In addition, in an example manner, the specific decision parameters provided may include not only parameters related to product attributes, but also decision parameters related to the capabilities, levels, services, etc. of the first user, i.e., the supplier, enabling the first user to screen according to the first user's situation.

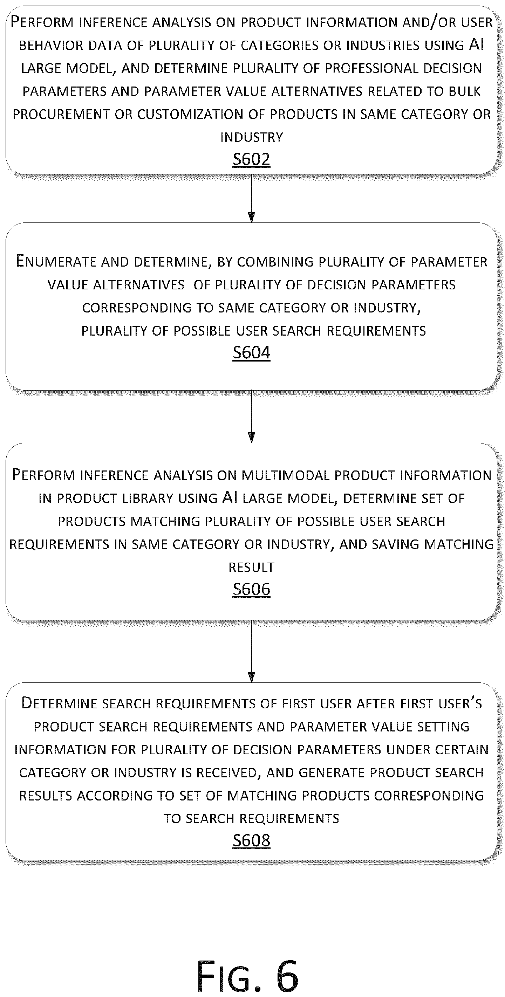

The present disclosure also provides a method for product information processing from the perspective of a server. Referring to FIG. 6, the method may comprise:
S602: performing an inference analysis on product information and/or user behavior data of a plurality of categories or industries using an artificial intelligence (AI) large model, and determining a plurality of professional decision parameters and parameter value alternatives related to bulk procurement or customization of products in the same category or industry;
S604: determining, by combining a plurality of parameter value alternatives of a plurality of decision parameters corresponding to the same category or industry, a plurality of possible user search requirements;
S606: performing an inference analysis on multimodal product information in a product library using the AI large model, determining a set of products matching the plurality of possible user search requirements in the same category or industry, and saving a matching result; and
S608: determining search requirements of a first user after the first user's product search request and parameter value setting information for a plurality of decision parameters under a certain category or industry is received, and generating product search results according to a set of matching products corresponding to the search requirements.

For the parts not described in detail in Embodiment II, reference may be made to Embodiment I and the other parts of this specification, which will not be described herein again.

It should be noted that the embodiments of the present disclosure may involve the use of user data. In practical applications, user-specific personal data may be used in the solutions described herein to the extent permitted by applicable laws and regulations (e.g., explicit consent from the users, effective notification to the users, etc.) in compliance with applicable laws and regulations of the country where the solutions are implemented.

Corresponding to Embodiment I, the embodiment of the present disclosure further provides a product search apparatus, wherein the apparatus may comprise:
an interactive area providing unit, configured for providing an interactive area in a product search result page after receiving a product search request input by a first user, wherein the interactive area is configured to provide a plurality of decision parameters, some or all of the decision parameters being associated with parameter value alternatives; and the decision parameters displayed in the interactive area comprise: a portion of professional decision parameters related to bulk procurement or customization of products in a category or industry to which a currently searched product belongs; the professional decision parameters are generated by an artificial intelligence AI large model after performing an inference analysis on product information and/or user behavior data in the category or industry; and
a search result updating unit, configured for updating product search results after receiving a parameter value setting result completed by the first user for the plurality of decision parameters.

In a specific implementation, the apparatus may further include:
a decision parameter updating unit, configured for, updating, in the process of updating the product search results, information on the decision parameters displayed in the interactive area, wherein the updated decision parameters are selected and determined from an entire set of decision parameters except for those having parameter values thereof set, so as to further narrow a search scope of the products.

For example, the updated product search results may be generated with the assistance of the AI large model.

In a specific implementation, the updated product search results may be acquired in the following manner:
determining search requirements of the first user according to the parameter value setting of the plurality of decision parameters, and generating the product search results according to a set of matching products corresponding to the search requirements;
the set of matching products is generated by: enumerating various possible product search requirements according to the plurality of decision parameters and parameter value alternatives corresponding to the category or industry, and then generating and saving the set of matching products corresponding to the plurality of product search requirements after the AI large model performs matching calculations based on multimodal product information of a plurality of products in a product library.

In addition, the decision parameters may further comprise: decision parameters related to a service capability, level, or attitude of a second user, wherein the second user is a wholesale or production supplier user of products.

Furthermore, the apparatus may further comprise:
a parameter value saving unit, configured for saving parameter values set by the first user respectively for the plurality of decision parameters during multiple rounds of interactions, so that when the first user initiates a product search request for the same category or industry again, product search results may be acquired by applying the set parameter values.

For example, the product search request input by the first user comprises: a product search request initiated by inputting a sentence expressed in natural language.

Corresponding to Embodiment II, the embodiment of the present disclosure further provides a product information processing apparatus, wherein the apparatus may comprise:
a decision parameter determination unit, configured for performing an inference analysis on product information and/or user behavior data of a plurality of categories or industries using an artificial intelligence (AI) large model, and determining a plurality of professional decision parameters and parameter value alternatives related to bulk procurement or customization of products in the same category or industry;
a requirement enumeration unit, configured for determining, by combining a plurality of parameter value alternatives of a plurality of decision parameters corresponding to the same category or industry, a plurality of possible user search requirements;
a saving unit, configured for performing an inference analysis on multimodal product information in a product library using the AI large model, determining a set of products matching the plurality of possible user search requirements in the same category or industry, and saving a matching result; and
a query unit, configured for determining search requirements of a first user after the first user's product search requirements and parameter value setting information for a plurality of decision parameters under a certain category or industry is received, and generating product search results according to a set of matching products corresponding to the search requirements.

In addition, the embodiment of the present disclosure further provides a computer-readable storage medium having a computer program stored thereon which, when executed by a processor, implements the steps of the methods described in any of the above-described method embodiments.

Also provided is an electronic device, comprising:
one or more processors; and
a memory associated with the one or more processors, the memory being configured to store program instructions which, when read and executed by the one or more processors, execute the steps of the methods described in any of the above-described method embodiments.

A computer program product, comprising computer programs/computer-executable instructions, wherein when the computer programs/computer-executable instructions are executed by a processor in an electronic device, the steps of the methods in the aforementioned method embodiments are implemented.

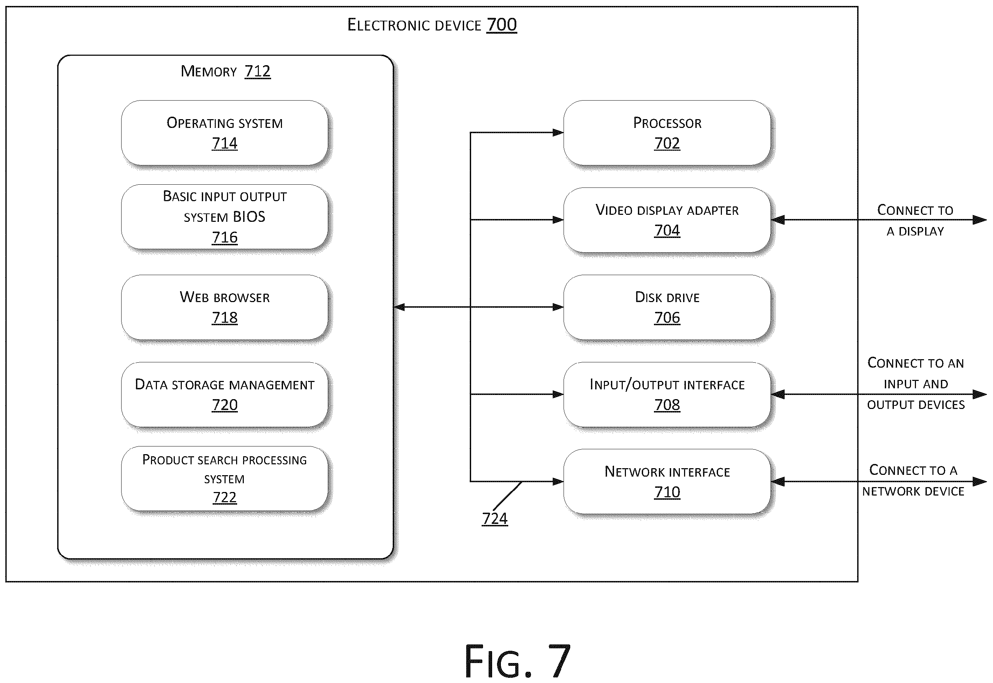

FIG. 7 exemplarily shows the architecture of the electronic device, which may specifically include a processor 702, a video display adapter 704, a disk drive 706, an input/output interface 708, a network interface 710, and a memory 712. The processor 702, the video display adapter 704, the disk drive 706, the input/output interface 708, and the network interface 710 may be communicatively connected with the memory 712 via a communication bus 724.

For example, the processor 702 may be implemented using a general-purpose CPU (Central Processing Unit) processor, a microprocessor, an application specific integrated circuit (Application Specific Integrated Circuit, ASIC), or one or more integrated circuits, configured for executing relevant programs to implement the technical solutions provided in the present disclosure.

The memory 712 may be implemented in the form of a ROM (Read Only Memory), a RAM (Random Access Memory), a static storage device, a dynamic storage device, etc. The memory 712 may store an operating system 714 for controlling the operation of the electronic device 700 and a basic input output system (BIOS) 716 for controlling low-level operations of the electronic device 700. In addition, a web browser 718, a data storage management system 720, and a product search processing system 722, and the like may also be stored therein. The product search processing system 722 may be an application program for specifically implementing the operations of the aforementioned steps in the embodiments of the present disclosure. In summary, when the technical solutions provided in the present disclosure are implemented by software or firmware, the relevant program code is stored in the memory 712 and is called and executed by the processor 702.

The memory 712 is an example of computer-readable media.

Computer-readable media further include non-volatile and volatile, removable and non-removable media employing any method or technique to achieve information storage. The information may be computer-readable instructions, data structures, modules of programs, or other data. Examples of computer storage media include, but are not limited to, a phase-change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical memories, a magnetic cassette tape, a magnetic tape, a magnetic disk storage or other magnetic storage devices, or any other non-transmission medium, which may be used to store information that can be accessed by a computing device. As defined herein, the computer-readable media do not include transitory media, such as modulated data signals and carriers.

The input/output interface 708 is used to connect to an input/output module to implement information input and output. The input output/module may be configured as a component in the device (not shown in the figure), or it can be externally connected to the device to provide corresponding functions. The input devices may include a keyboard, a mouse, a touch screen, a microphone, various sensors, etc., and the output devices may include a display, a speaker, a vibrator, an indicator light, etc.

The network interface 710 is used to connect to a communication module (not shown in the figure) to implement communication and interaction between the device and other devices. The communication module may achieve communication through wired means (such as USB, network cable, etc.) or wireless means (such as mobile network, WIFI, Bluetooth, etc.).

The communication bus 724 comprises a pathway for transmitting information among the various components of the device (e.g., the processor 702, the video display adapter 704, the disk drive 706, the input/output interface 708, the network interface 710, and the memory 712).

It should be noted that although the above device only shows the processor 702, the video display adapter 704, the disk drive 706, the input/output interface 708, the network interface 710, the memory 712, the communication bus 724, the device may further include other required components to achieve normal operation during a specific implementation process. Further, it would be appreciated by those skilled in the art that the above-mentioned device may only include components needed for implementing the solutions of the present disclosure, and does not necessarily include all components shown in the figures.

As can be seen from the description of the above embodiments, it is clear that the present disclosure can be implemented by means of software plus the necessary general hardware platform. Based on such an understanding, the part of the technical solution of the present disclosure, which is essential or contributes to the conventional techniques, can be embodied in the form of a software product. The computer software product can be stored in a storage medium, such as a ROM/RAM, a magnetic disk, and an optical disk, and include several instructions for enabling a computer device (which may be a personal computer, a server, a network device, or the like) to execute the methods described in the embodiments or some parts of the embodiments of the present disclosure.

The various embodiments in this specification are all described in a progressive manner. The various embodiments may refer to other embodiments for the same or similar parts, and each of the embodiments focuses on the parts differing from the other embodiments. In particular, the system or system embodiments are basically similar to the method embodiments, the description for these embodiments is thus relatively brief, and the description of the method embodiments may be referred to for relevant details. The system and system embodiments described above are only examples, wherein the units described as separate components may or may not be physically separated; and the components displayed as units may or may not be physical units; that is, the units may be located in one place, or may be distributed on a plurality of network units. Some or all of the modules may be selected according to actual needs to achieve the objectives of the solutions of the embodiments. Those of ordinary skill in the art may understand and implement the embodiments without creative efforts.

The product searching method and electronic device provided by the present disclosure have been introduced in detail above. The principles and implementations of the present disclosure are described with specific examples herein. The descriptions of the above embodiments are only used to help understand the methods and the core idea of the present disclosure. At the same time, for those skilled in the art, according to the idea of the present disclosure, there will be modifications in specific implementations and the application scope. In conclusion, the content of the present specification should not be construed as a limitation to the present disclosure.

The present disclosure may further be understood with clauses as follows.

Clause 1. A product search method, the method comprising:
providing an interactive area in a product search result page after receiving a product search request input by a first user, wherein the interactive area is configured to provide a plurality of decision parameters, some or all of the decision parameters being associated with parameter value alternatives; and the decision parameters displayed in the interactive area comprise: a portion of professional decision parameters related to bulk procurement or customization of products in a category or industry to which a currently searched product belongs; the professional decision parameters are generated by an artificial intelligence AI large model after performing an inference analysis on product information and/or user behavior data in the category or industry; and
updating product search results after receiving a parameter value setting result completed by the first user for the plurality of decision parameters.

Clause 2. The method according to clause 1, further comprising:
updating, in the process of updating the product search results, information on the decision parameters displayed in the interactive area, wherein the updated decision parameters are selected and determined from an entire set of decision parameters except for those having parameter values thereof set, so as to further narrow a search scope of the products.

Clause 3. The method according to clauses 1 or 2, wherein the updated product search results are generated with the assistance of the AI large model.

Clause 4. The method according to any one of clauses 1 to 3, wherein the updated product search results are acquired by:
determining search requirements of the first user according to the parameter value setting of the plurality of decision parameters, and generating the product search results according to a set of matching products corresponding to the search requirements;
the set of matching products is generated by: enumerating various possible product search requirements according to the plurality of decision parameters and parameter value alternatives corresponding to the category or industry, and then generating and saving the set of matching products corresponding to the plurality of product search requirements after the AI large model performs matching calculations based on multimodal product information of a plurality of products in a product library.

Clause 5. The method according to any one of clauses 1 to 4, wherein the decision parameters further comprise: decision parameters related to a service capability, level, or attitude of a second user, wherein the second user is a wholesale or production supplier user of products.

Clause 6. The method according to any one of clauses 1 to 5, further comprising saving parameter values set by the first user respectively for the plurality of decision parameters during multiple rounds of interactions, so that when the first user initiates a product search request for the same category or industry again, product search results may be acquired by applying the set parameter values.

Clause 7. The method according to any one of clauses 1 to 6, wherein the product search request input by the first user comprises: a product search request initiated by inputting a sentence expressed in natural language.

Clause 8. A product information processing method comprising:
performing an inference analysis on product information and/or user behavior data of a plurality of categories or industries using an artificial intelligence (AI) large model, and determining a plurality of professional decision parameters and parameter value alternatives related to bulk procurement or customization of products in the same category or industry;
determining, by combining a plurality of parameter value alternatives of a plurality of decision parameters corresponding to the same category or industry, a plurality of possible user search requirements;
performing an inference analysis on multimodal product information in a product library using the AI large model, determining a set of products matching the plurality of possible user search requirements in the same category or industry, and saving a matching result; and
determining search requirements of a first user after the first user's product search requirements and parameter value setting information for a plurality of decision parameters under a certain category or industry is received, and generating product search results according to a set of matching products corresponding to the search requirements.

Clause 9. A computer-readable storage medium having a computer program stored thereon which, when executed by a processor, executes the steps of the method according to any one of clauses 1 to 8.

Clause 10. An electronic device comprising:
one or more processors; and
a memory associated with the one or more processors, the memory being configured to store program instructions which, when read and executed by the one or more processors, execute the steps of the method according to any one of clauses 1 to 8.

Clause 11. A computer program product, comprising computer programs/computer-executable instructions, wherein when the computer programs/computer-executable instructions are executed by a processor in an electronic device, the steps of the method according to any one of clauses 1 to 8 are implemented.

## Claims

1. A method comprising:
providing an interactive area in a product search result page after receiving a product search request of a first user;
displaying a plurality of decision parameters at the interactive area providing, at least some of the plurality of decision parameters being associated with parameter value alternatives, the plurality of decision parameters including a portion of professional decision parameters related to bulk procurement or customization of products in a category or industry to which a currently searched product belongs, the professional decision parameters being generated by an artificial intelligence (AI) large model after performing an inference analysis on product information and/or user behavior data in the category or industry; and
updating product search results after receiving a parameter value setting result for the plurality of decision parameters.

2. The method according to claim 1, wherein the parameter value setting result is completed by the first user.

3. The method according to any one of claims 1 or 2, further comprising:
updating, in a process of updating the product search results, information on the plurality of decision parameters displayed in the interactive area,
wherein updated decision parameters are selected and determined from a set of decision parameters except for those already have set parameter values, so as to further narrow a search scope of the products.

4. The method according to any one of claims 1 to 3, wherein the updated product search results are generated with an assistance of the AI large model.

5. The method according to any one of claims 1 to 4, further comprising acquiring the updated product search results are acquired by:
determining search requirements of the user according to a parameter value setting of the plurality of decision parameters; and
generating the product search results according to a set of matching products corresponding to the search requirements.

6. The method according to claim 5, further comprising generating the set of matching products by:
enumerating various product search requirements according to the plurality of decision parameters and parameter value alternatives corresponding to the category or industry;
using the AI large model to perform matching calculations based on multimodal product information of a plurality of products in a product library; and
generating and saving the set of matching products corresponding to the product search requirements.

7. The method according to any one of claims 1 to 6, wherein the plurality of decision parameters further comprise decision parameters related to a service capability, level, or attitude of a second user, the second user being a wholesale or production supplier user of products.

8. The method according to any one of claims 1 to 7, further comprising saving parameter values set by the first user respectively for the plurality of decision parameters during multiple rounds of interactions.

9. The method according to claim 8, further comprising applying the parameter values for the product search results after the first user initiates a product search request for the category or industry again;
optionally wherein the product search request includes a sentence or phrase expressed in natural language.

10. A method comprising:
performing an inference analysis on product information and/or user behavior data of a plurality of categories or industries using an artificial intelligence (AI) large model;
determining a plurality of professional decision parameters and parameter value alternatives related to bulk procurement or customization of products in a category or industry;
determining, by combining a plurality of parameter value alternatives of a plurality of decision parameters corresponding to the category or industry, a plurality of possible user search requirements;
performing an inference analysis on multimodal product information in a product library using the AI large model;
determining a set of products matching a plurality of user search requirements in the category or industry;
saving a matching result;
determining search requirements of a user after receiving a product search request and parameter value setting information for a plurality of decision parameters under the category or industry; and
generating product search results according to a set of matching products corresponding to the search requirements;
optionally wherein the product search request includes a sentence or phrase expressed in natural language.

11. An electronic device comprising:
one or more processors; and
one or more memories storing thereon computer-readable instructions that, when executed by the one or more processors, cause the one or more processors to perform acts comprising:
providing an interactive area in a product search result page after receiving a product search request of a first user;
displaying a plurality of decision parameters at the interactive area providing, at least some of the plurality of decision parameters being associated with parameter value alternatives, the plurality of decision parameters including a portion of professional decision parameters related to bulk procurement or customization of products in a category or industry to which a currently searched product belongs, the professional decision parameters being generated by an artificial intelligence AI large model after performing an inference analysis on product information and/or user behavior data in the category or industry; and
updating product search results after receiving a parameter value setting result for the plurality of decision parameters.

12. The electronic device according to claim 11, wherein the acts further comprise:
updating, in a process of updating the product search results, information on the plurality of decision parameters displayed in the interactive area,
wherein updated decision parameters are selected and determined from a set of decision parameters except for those already have set parameter values, so as to further narrow a search scope of the products;
optionally wherein the updated product search results are generated with an assistance of the AI large model.

13. The electronic device according to claims 11 or 12, wherein the acts further comprise acquiring the updated product search results are acquired by:
determining search requirements of the user according to a parameter value setting of the plurality of decision parameters; and
generating the product search results according to a set of matching products corresponding to the search requirements;
optionally wherein the acts further comprise generating the set of matching products by: enumerating various product search requirements according to the plurality of decision parameters and parameter value alternatives corresponding to the category or industry; using the AI large model to perform matching calculations based on multimodal product information of a plurality of products in a product library; and generating and saving the set of matching products corresponding to the product search requirements.

14. The electronic device according to any one of claims 11 to 13, wherein the plurality of decision parameters further comprise decision parameters related to a service capability, level, or attitude of a second user, the second user being a wholesale or production supplier user of products;
optionally wherein the acts further comprise saving parameter values set by the first user respectively for the plurality of decision parameters during multiple rounds of interactions.

15. The electronic device according to claim 14, wherein the acts further comprise applying the parameter values for the product search results after the first user initiates a product search request for the category or industry again.
